# FASCICULE DE BREVET EUROPEEN

(11) **EP 0 626 287 B1**
(45) Date de publication et mention de la délivrance du brevet: **30.12.1998**
(21) Numéro de dépôt: 94107441.1
(22) Date de dépôt: 13.05.1994
(51) Int. Cl.: B60L 7/24, B60L 3/10

(54) **Véhicule comprenant un système de freinage électrique et mécanique**
Fahrzeug mit einem elektrischen und mechanischen Bremssystem
Vehicle provided with an electric and mechanical braking system

(30) Priorité: 18.05.1993 FR 9306096
(43) Date de publication de la demande: 30.11.1994
(73) Titulaire: The Swatch Group Management Services AG, 2501 Biel (CH)
(72) Inventeur: Müller, Jacques, CH-2732 Reconvilier (FR); Jeanneret, René, CH-3274 Merzligen (FR); Toth, Antoine, CH-2800 Delémont (FR)
(74) Mandataire: de Montmollin, Henri

(56) Documents cités:
- EP-A- 0 085 394
- CH-A- 413 609
- DE-A- 4 124 496
- GB-A- 2 219 450
- US-A- 3 621 929
- US-A- 3 924 902
- US-A- 5 061 883

## Description

La présente invention concerne un véhicule, notamment du type électrique, comprenant un système de freinage mixte, c'est-à-dire électrique et mécanique.

Plus particulièrement, l'invention concerne un véhicule du type comprenant :
- une roue;
- un moteur électrique comportant un stator et un rotor couplé magnétiquement audit stator et solidaire en rotation de ladite roue;
- des moyens de commande agencés pour faire fonctionner ledit moteur électrique dans un mode de freinage en réponse à un signal de consigne;
- un dispositif de freinage mécanique associé à ladite roue de manière qu'il est susceptible d'exercer un couple de freinage mécanique sur cette roue; et
- des moyens de freinage actionnables par un conducteur dudit véhicule, ces moyens de freinage fournissant, lorsqu'ils sont actionnés par ledit conducteur, ledit signal de consigne auxdits moyens de commande pour déterminer la valeur dudit couple de freinage mécanique lesdits moyens de freinage étant actionnables entre deux positions extrêmes définissant une course de freinage qui comprend une première partie suivie d'une deuxième partie (US-A-3,621,929).

Lors du freinage, il est connu que le blocage d'une ou plusieurs roue(s) d'un véhicule est néfaste pour l'efficacité du freinage. La perte d'adhérence d'une roue diminue la force de freinage sur cette roue et engendre une instabilité du véhicule.

Plusieurs dispositifs de freinage anti-bloquants pour des voitures à freinage purement mécanique sont connus de l'homme du métier.

Dans le cas d'un freinage mixte (électrique et mécanique), le document DE-A-42 25 080 décrit une voiture du type électrique équipée de quatre moteurs électriques couplés respectivement aux quatre roues de cette voiture. En plus de ces quatre moteurs capables de fonctionner comme générateurs dans un mode de freinage, il est prévu un dispositif de freinage mécanique comprenant quatre freins à disque couplés respectivement avec les quatre roues de la voiture.

Le dispositif de freinage anti-bloquant décrit dans le document cité ci-dessus concerne seulement l'essieu arrière dans une première variante et les deux essieux dans une seconde variante.

Dans la première variante, un capteur de vitesse est prévu sur chacune des deux roues de l'essieu arrière. Un dispositif de contrôle règle une électro-vanne prévue dans le circuit hydraulique des freins à disque de l'essieu arrière en utilisant les deux signaux fournis respectivement par les deux capteurs de vitesse.

Le dispositif de contrôle est agencé pour réagir de diverses manières, en fonction de divers paramètres de roulement du véhicule, en limitant ou en enlevant la pression appliquée sur les deux freins à disque de l'essieu arrière. Dans certains cas, il est aussi prévu que le dispositif de contrôle diminue le couple de freinage des moteurs électriques.

Un premier désavantage du dispositif de freinage anti-bloquant décrit ci-avant réside dans le dispositif de contrôle dont l'agencement ne peut être que complexe et onéreux. Un deuxième désavantage provient du fait qu'il est très difficile d'intégrer dans un dispositif de contrôle l'ensemble des situations de roulement envisageables. Ainsi, la réaction du dispositif de freinage anti-bloquant décrit ci-avant risque fort d'être inappropriée dans plusieurs situations de roulement, ce qui rend ce dispositif de freinage anti-bloquant peu fiable. De plus, le dispositif de freinage anti-bloquant réagit avec un certain temps de retard dû au temps de réaction du dispositif de contrôle.

Dans le véhicule automobile décrit dans le brevet US 3,621,929, un moteur électrique à enroulements séries entraîne les roues d'au moins un essieu moteur via un différentiel et peut fonctionner en génératrice lors de freinage. Il est prévu un système de freinage mixte dans lequel les freins hydrauliques associés aux roues de l'essieu moteur ne sont pas actionnés tant que le couple maximal pouvant être atteint par le freinage électrique n'est pas atteint. Pendant cette période, le couple de freinage électrique est commandé par la pression hydraulique provenant du maître cylindre de la pédale de frein. Quand cette pression dépasse un seuil qui correspond au couple maximal de freinage électrique, le freinage mécanique commence et croît avec l'augmentation de pression. Il n'est pas prévu de système d'anti-blocage dans ce document.

Une méthode particulière de freinage mixte électrique et mécanique est exposée dans le brevet US 5,061,883, qui décrit un véhicule ferroviaire à moteur électrique linéaire et à freins pneumatiques. Il s'agit dans ce cas d'assurer un passage en douceur du freinage électrique au freinage pneumatique juste avant l'arrêt du véhicule, en évitant que la fréquence statorique du moteur à courant alternatif devienne négative et puisse ainsi provoquer des variations inconfortables du couple de freinage total. Dans ce but, il est prévu de limiter la fréquence statorique vers le bas, à une valeur nulle ou très faible, lorsque la vitesse du véhicule s'approche de zéro. Le problème du blocage des roues, notamment en cas de freinage à une vitesse éloignée de zéro, n'est pas pris en considération dans ce document.

Le but de la présente invention est de pallier les inconvénients du dispositif de freinage décrit dans le document DE-A-42 25 080, en proposant un véhicule équipé d'un système de freinage mixte (électrique et mécanique) anti-bloquant présentant la capacité de réagir instantanément de manière efficace à n'importe quelle situation de roulement lorsqu'un mode de freinage est activé par un conducteur du véhicule.

A cet effet, la présente invention concerne un véhicule comprenant les caractéristiques énoncées dans la revendication 1.

Il résulte de ces caractéristiques un système de freinage anti-bloquant de ladite roue qui est très performant.

Le moteur électrique asynchrone fournissant un couple de force variant avec le glissement, c'est-à-dire en fonction de la différence de fréquence entre la fréquence statorique et la fréquence rotorique, le couple de force du freinage électrique lors d'une perte d'adhérence de la roue solidaire en rotation du rotor de ce moteur électrique diminue automatiquement et instantanément sans aucune intervention d'un dispositif de contrôle.

Ensuite, lorsqu'un freinage mécanique est exercé sur la roue conjointement au freinage électrique, le moteur électrique réagit automatiquement et instantanément dès que le freinage mécanique commence à bloquer la roue, en diminuant dans un premier temps le couple de force du freinage électrique. Dans un second temps, si le seul freinage mécanique suffit à bloquer la roue, le moteur électrique passe alors d'un fonctionnement de générateur à un fonctionnement de moteur par inversion du signe mathématique du glissement, ce qui est également obtenu automatiquement et instantanément étant donné le choix de la fréquence de référence.

Selon une caractéristique particulière de l'invention, la différence entre la fréquence de référence et la fréquence statorique est inférieure à une valeur maximale prédéterminée, cette valeur maximale prédéterminée pouvant être variable en fonction de la valeur de la fréquence de référence. De ce fait, il est possible d'optimiser le système de freinage en fonction de la vitesse du véhicule.

Selon d'autres caractéristiques de l'invention, il est prévu que ledit dispositif de freinage mécanique comprend un circuit hydraulique et un frein mécanique servant à exercer ledit couple de freinage mécanique, ce dernier variant en fonction d'une pression de freinage appliquée par le circuit hydraulique sur le frein mécanique et déterminée par la position d'une pédale de frein ou par la pression exercée sur cette pédale de frein par un conducteur du véhicule. La pédale de frein est susceptible d'être actionnée sur une course de freinage entre deux positions extrêmes de cette pédale de frein. Un limiteur de pression est prévu dans le circuit hydraulique de manière à limiter le couple de freinage mécanique pour que ce dernier reste inférieur ou égal à un couple maximal pouvant être fourni par le moteur électrique.

Il résulte de ces dernières caractéristiques un système de freinage totalement anti-bloquant. En effet, le couple de freinage mécanique étant toujours inférieur ou égal à un couple maximal pouvant être fourni par le moteur électrique, ce dernier est toujours à même de fournir un couple supérieur ou égal' à celui du frein mécanique et par conséquent de débloquer la roue dans n'importe quelle situation de roulement.

Dans un mode de réalisation particulier, le véhicule comporte au moins une première roue à laquelle est associé ledit dispositif de freinage et une seconde roue, ainsi qu'un premier moteur électrique asynchrone et un deuxième moteur électrique asynchrone associés respectivement auxdites première et deuxième roues. Ce véhicule est caractérisé en ce que lesdits premier et deuxième moteurs électriques asychrones comprennent chacun un bobinage statorique présentant un nombre identique de pôles et de spires, ces premier et deuxième moteurs électriques asynchrones étant reliés en parallèle auxdits moyens d'alimentation électrique qui absorbent dans le mode de freinage un courant électrique alternatif total asservi audit signal de consigne.

Il résulte des caractéristiques particulières mentionnées ci-dessus que, lorsque la première roue bloque partiellement sous l'effet du dispositif de freinage, le freinage électrique diminue sur cette première roue et augmente sur la deuxième roue. De ce fait, le freinage électrique total reste sensiblement constant tant que le couple de freinage maximal du deuxième moteur électrique asynchrone n'est pas atteint.

On notera ici que les moyens de mesure peuvent être formés par divers dispositifs électriques, mécaniques ou optiques.

D'autres caractéristiques et avantages de l'invention seront également exposés dans la description détaillée suivante, faite en référence aux dessins annexés donnés à titre nullement limitatif et dans lesquels :
- la figure 1 représente schématiquement un premier mode de réalisation général d'un véhicule équipé d'un système de freinage selon l'invention;
- la figure 2 représente schématiquement un deuxième mode de réalisation d'un véhicule équipé d'un système de freinage selon l'invention;
- la figure 3 représente schématiquement un troisième mode de réalisation d'un véhicule équipé d'un système de freinage selon l'invention.

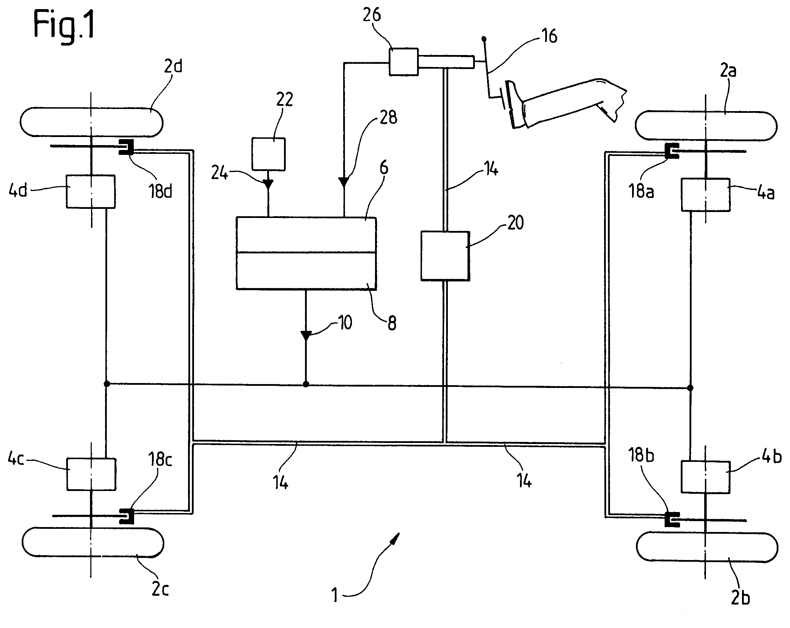

Sur la figure 1 est représenté un véhicule 1 équipé de quatre roues 2a, 2b, 2c et 2d et de quatre moteurs électriques asynchrones 4a, 4b, 4c et 4d respectifs.

Chacun des moteurs électriques asynchrones 4a à 4d comporte un stator (non représenté) et un rotor (non représenté) couplé magnétiquement audit stator et solidaire en rotation de la roue 2a, respectivement 2b à 2d à laquelle il est associe. On notera qu'un réducteur de fréquence de rotation peut être prévu entre le rotor du moteur électrique et la roue à laquelle ce moteur électrique est associé. Dans ce cas, la fréquence de rotation de la roue est différente de la fréquence de rotation du rotor nommée par la suite fréquence rotorique. Par fréquence de rotation d'une roue, on comprend le nombre de tours par unité de temps effectué par cette roue et mesuré par un capteur à impulsions associé à cette roue.

Le véhicule 1 est également équipé de moyens de commande 6 servant à commander le fonctionnement des moteurs électriques 4a à 4d. Ces moyens de commande 6 sont associés à des moyens d'alimentation électrique 8 pouvant fournir ou absorber un courant électrique alternatif 10 suivant que les moteurs électriques 4a à 4d fonctionnent globalement comme moteur ou comme générateur.

Le véhicule 1 comporte également un dispositif de freinage mécanique associé aux roues 2a à 2d et servant à exercer un couple de freinage mécanique sur chacune de ces roues 2a à 2d. Ce dispositif de freinage mécanique comporte un circuit hydraulique 14 reliant hydrauliquement la pédale de frein 16 à quatre freins mécaniques 18a, 18b, 18c et 18d associés respectivement aux quatre roues 2a à 2d. Chacun des freins mécaniques 18a à 18d est susceptible d'exercer un couple de freinage mécanique sur la roue à laquelle il est associé. La valeur de ce couple de freinage mécanique dépend de la valeur de la pression régnant dans le circuit hydraulique 14, cette pression étant déterminée par la position de la pédale de frein 16 qui peut être actionnée entre deux positions extrêmes définissant une course de freinage.

Le dispositif de freinage mécanique comprend aussi un limiteur de pression 20 servant à limiter le couple de freinage mécanique exercé sur les roues 2a à 2d du véhicule 1.

Chacun des stators des moteurs électriques asynchrones 4a à 4d comprend un bobinage statorique agencé de manière à produire un champ magnétique tournant à une fréquence statorique déterminée par les moyens de commande 6. Chacun des rotors des moteurs 4a à 4d respectifs tourne avec une propre fréquence rotorique en réponse au champ magnétique tournant.

On remarquera que les moteurs 4a à 4d sont alimentés en parallèle par les moyens d'alimentation électrique 8 associés aux moyens de commande 6. La fréquence statorique du champ magnétique tournant est donc identique pour chacun des moteurs 4a à 4d si chacun de ces moteurs comprend un bobinage statorique ayant un même nombre de pôles et de spires. C'est ce dernier cas qui est envisagé dans chacun des trois modes de réalisation de l'invention décrit dans ce document.

Ainsi, la fréquence statorique de chacun des quatre moteurs 4a à 4d est égale et proportionnelle à la fréquence du courant électrique alternatif 10 fourni ou absorbé par les moyens d'alimentation électrique 8.

Le véhicule 1 selon l'invention comprend également des moyens de mesure 22 servant à déterminer la vitesse de roulement de ce véhicule 1 et à fournir un signal de référence 24 ayant une valeur correspondant à une fréquence de référence sensiblement égale à la fréquence de rotation qu'aurait une roue d'un même diamètre que les roues du véhicule 1 et qui roulerait sans glisser à la vitesse de ce véhicule 1. A cette fréquence de référence correspond une fréquence rotorique de référence qui lui est proportionnelle. De manière avantageuse, le signal de référence prend en compte la position d'un volant servant à diriger le véhicule étant donné les différences de vitesse de roulement des roues du véhicule dans un virage.

Dans le cas où il n'y a pas de réducteur entre les rotors des moteurs 4a à 4d et les roues respectives 2a à 2d, la fréquence de référence définie ci-avant est égale à la fréquence rotorique de référence.

On notera que dans le cas où un réducteur est prévu entre chaque moteur 4a à 4d et la roue respective associée à ce moteur, il est prévu que les quatre réducteurs ont un même coefficient de réduction. Ainsi, le coefficient de réduction entre la fréquence de référence définie cidessus et la fréquence rotorique de référence est parfaitement déterminé et identique pour chacun des moteurs 4a à 4d.

Le coefficient de réduction peut donc sans autre être intégré dans le dispositif de mesure 22 de telle manière que le signal de référence ait une valeur correspondant à la fréquence rotorique de référence ou être intégré dans les moyens de commande 6 qui calculent alors eux-mêmes la fréquence rotorique de référence par une simple multiplication du signal de référence 24 avec ce coefficient de réduction. Suite à ce qui vient d'être mentionné, on notera que le terme "fréquence de référence" correspond à la fréquence rotorique de référence.

Finalement, le véhicule 1 comprend encore une unité de consigne 26 servant à détecter au moins un paramètre en relation avec la position de la pédale de frein 16 et à fournir un signal de consigne 28 aux moyens de commande 6.

Les moyens de commande 6 sont agencés de manière à régler le couple de freinage électrique total exercé par les moteurs 4a à 4d, lorsque la pédale de frein 16 est actionnée, en fonction de la valeur du signal de consigne 28. Les moyens de commande 6 règlent la fréquence statorique des moteurs 4a à 4d de manière que, lorsqu'un mode de freinage électrique est actionné par la pédale de frein 16, la différence de fréquence entre la fréquence de référence et la fréquence statorique de chacun des moteurs 4a à 4d est positive. Dans une variante de réalisation, la différence de fréquence susmentionnée est inférieure à une valeur prédéterminee. On notera que cette valeur prédéterminée peut être variable en fonction de la valeur du signal de référence 24.

Le système de freinage selon l'invention décrit cidessus est anti-bloquant et particulièrement efficace pour répondre de manière appropriée à toutes les situations de roulement envisageables. Lorsqu'une des roues 2a à 2d commence à bloquer, le moteur électrique asynchrone qui lui est associé fournit instantanément et automatiquement un couple de freinage électrique inférieur étant donné que le glissement de ce moteur électrique asynchrone diminue en valeur absolue. Si le couple de freinage mécanique exercé sur la roue est bien trop élevé pour les conditions d'adhérence de cette roue, le couple de freinage électrique fourni par le moteur électrique peut sans autre diminuer jusqu'à une valeur nulle. Si le couple de freinage mécanique est toujours trop élevé, le moteur électrique asynchrone associé à cette roue passe alors instantanément et automatiquement dans un mode de fonctionnement moteur en fournissant un couple d'entraînement s'opposant au couple de freinage mécanique.

Dans le cas où le limiteur de pression est dimensionné de manière que le couple de freinage mécanique exercé par chacun des freins mécaniques 18a à 18d reste inférieur ou égal au couple que peut fournir chacun des moteurs électriques asynchrones 4a à 4d, chaque moteur 4a à 4d peut fournir un couple d'entraînement supérieur ou égal au couple de freinage mécanique maximal pouvant être exercé par chaque frein mécanique 18a à 18d. De ce fait, on obtient un système de freinage anti-bloquant total.

On notera que le système de freinage selon l'invention s'applique également lorsque les moteurs électriques asynchrones 4a à 4d ne sont pas alimentés tous en parallèle. Dans une variante de ce premier mode de réalisation de l'invention, chacun des quatre moteurs 4a à 4d est commandé et alimenté séparément. Dans une deuxième variante de ce premier mode de réalisation, deux des quatre moteurs électriques asynchrones sont alimentés en parallèle par des premiers moyens d'alimentation électrique et les deux autres moteurs électriques asynchrones sont également alimentées en parallèle par des seconds moyens d'alimentation électrique. Chacun de ces premiers et seconds moyens d'alimentation électrique est commandé par des propres moyens de commande ou conjointement par des moyens de commande centraux.

On notera encore que le dispositif de freinage mécanique peut être de n'importe quel type connu de l'homme du métier.

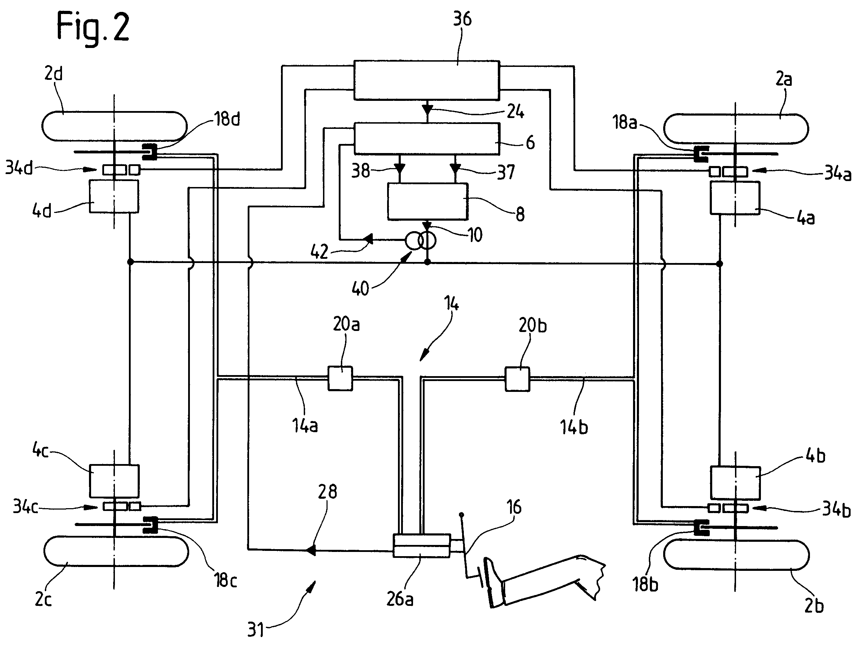

En se référant à la figure 2, on décrira ci-après un deuxième mode de réalisation d'un véhicule 31 équipé d'un système de freinage selon l'invention.

Les références déjà décrites dans le premier mode de réalisation de l'invention ne seront pas à nouveau commentées ici en détail.

Dans ce deuxième mode de réalisation, le dispositif de freinage mécanique comporte un circuit hydraulique 14 formé par un premier circuit hydraulique secondaire 14a et par un second circuit hydraulique secondaire 14b. Ces premier et second circuits hydrauliques secondaires 14a et 14b sont indépendants l'un de l'autre. Cependant, la pression régnant dans chacun de ces circuits hydrauliques secondaires 14a et 14b est déterminée conjointement à l'aide de la pédale de frein 16.

Sur chacun des circuits hydrauliques secondaires 14a et 14b est prévu un limiteur de pression 20a et 20b servant à limiter la pression susceptible de régner respectivement dans le premier circuit hydraulique secondaire 14a et dans le second circuit hydraulique secondaire 14b.

On notera ici qu'il est possible de prévoir une pression maximale différente pour le premier circuit hydraulique secondaire 14a et pour le second circuit hydraulique secondaire 14b. De ce fait, il est possible d'exercer un couple de freinage mécanique différent à l'avant et à l'arrière du véhicule 31. Dans ce dernier cas, il est également possible de prévoir des moteurs électriques asynchrones capables de fournir un couple électrique maximal de valeur différente entre les moteurs 4c et 4d prévus à l'avant du véhicule 31 et les moteurs 4a et 4b prévus à l'arrière de ce véhicule 31 tout en ayant un système de freinage totalement anti-bloquant sans aucun surdimensionnement de l'un ou l'autre des moteurs 4a à 4d.

Sur la figure 2, les moyens de mesure, servant à mesurer une fréquence de référence sensiblement proportionnelle à la fréquence de rotation d'une roue ayant un même diamètre que les roues 2a à 2d du véhicule 31 et roulant sans glisser à la vitesse de ce véhicule, sont formés par quatre capteurs de fréquence de rotation 34a, 34b, 34c et 34d associés respectivement aux roues 2a à 2d ou, de manière équivalente, aux quatre rotors des moteurs électriques asynchrones 4a à 4d respectifs.

Les quatre capteurs de fréquence de rotation 34a à 34d sont reliés électriquement à une électronique de mesure 36, laquelle fournit un signal de référence 24 aux moyens de commande 6. L'électronique de mesure 36 est agencée de manière que le signal de référence 24 qu'elle fournit aux moyens de commande 6 ait une valeur correspondant à la fréquence rotorique maximale des moteurs 4a à 4d ou, de manière équivalente, à la fréquence de rotation maximale des roues 2a à 2d.

Comme cela a déjà été précisé dans le premier mode de réalisation de l'invention, un facteur identique et déterminé relie la fréquence rotorique de chacun des moteurs 4a à 4d à la fréquence de rotation de la roue 2a, respectivement 2b à 2d qui lui est associée. De ce fait, il est fonctionnellement équivalent que le signal de référence 24 ait une valeur correspondant à la fréquence de rotation maximale des roues 2a à 2d ou à la fréquence rotorique maximale des moteurs 4a à 4d. Cependant, les moyens de commande 6, lorsqu'un mode de freinage est activé au moyen de la pédale de frein 16, règlent la fréquence statorique des moteurs 4a à 4d de telle manière que cette fréquence statorique soit inférieure à la fréquence rotorique maximale.

On remarquera que la fréquence rotorique maximale formant la frequence de référence a une valeur sensiblement proportionnelle à la vitesse du véhicule 31 tant qu'au moins une des quatre roues 2a à 2d roule sans glisser. Dans le cas où la roue présentant la meilleure adhérence a un léger glissement, la fréquence de référence fournie par les moyens de mesure aux moyens de commande 6 reste une bonne approximation de la vitesse du véhicule 31 exprimée en fréquence de rotation du rotor d'un des quatre moteurs 4a à 4d.

On notera que dans ce deuxième mode de réalisation, les moyens de commande 6 règlent indépendamment la fréquence et l'amplitude de tension du courant électrique alternatif 10 alimentant les quatre moteurs électriques asynchrones 4a à 4d, à l'aide respectivement d'un premier signal de commande 37 et d'un deuxième signal de commande 38.

Il est également prévu, dans ce deuxième mode de réalisation, une unité de mesure 40 servant à mesurer le courant électrique alternatif 10. Cette unité de mesure 40 fournit aux moyens de commande 6 un signal 42 dont la valeur est représentative du courant électrique alternatif 10. La valeur du courant est asservie à la valeur du signal de consigne 28 fourni par l'unité de consigne 26a aux moyens de commande 6. Ainsi, les moyens de commande 6 gèrent le réglage de l'amplitude de tension et de la fréquence du courant électrique alternatif 10 en fonction du signal de consigne 28. De ce fait, le signal de consigne 28 règle le couple total du freinage électrique étant donné que ce couple total du freinage électrique est défini par la valeur de ce courant électrique alternatif 10. De plus, comme cela a déjà été mentionné, les moyens de commande 6 gèrent le réglage de la fréquence statorique par le moyen de la fréquence du courant électrique alternatif 10 en fonction du signal de référence 24.

La gestion du freinage électrique conjointement au freinage mécanique est prévue dans ce deuxième mode de réalisation de la manière suivante : dans une première phase, il est prévu d'utiliser premièrement le freinage électrique et seulement dans une deuxième phase le freinage mécanique, le freinage électrique ayant alors sensiblement atteint le couple maximal de freinage électrique des moteurs 4a à 4d. Pour ce faire, l'unité de consigne 26a est formée par un capteur de position de la pédale de frein 16. Il est à noter que la gestion du freinage de ce deuxième mode de réalisation décrit ici peut ne concerner qu'une certaine plage de vitesses, c'est-à-dire ne fonctionner de la manière proposée par la présente invention que dans une plage de vitesses donnée et dans un autre mode de fonctionnement en dehors de cette plage de vitesses donnée, notamment pour les petites vitesses.

La pédale de frein 16 présente une certaine course dont une première partie n'engendre aucune augmentation de pression dans le circuit hydraulique 14. Les moyens de commande sont agencés de manière que les moteurs électriques asynchrones 4a à 4d fournissent sensiblement un couple de freinage électrique maximal lorsque la pédale de frein 16 est située sensiblement en bout de la première partie de la course susmentionnée. Dans une seconde partie de la course pouvant être parcourue par la pédale de frein 16, le freinage électrique est commandé de telle manière qu'il fournisse un couple de freinage électrique maximal, et le couple de freinage mécanique est progressivement augmenté. Afin de limiter le freinage mécanique, les limiteurs de pression 20a à 20b sont prévus respectivement dans les premier et second circuits hydrauliques secondaires 14a et 14b.

Dans le cas où une des roues 2a à 2d commence à bloquer, le couple de freinage électrique exercé sur cette roue par le moteur électrique asynchrone qui lui est associé diminue instantanément et automatiquement. Etant donné que le signal 42, fournissant la valeur du courant électrique alternatif 10 aux moyens de commande 6, est asservi au signal de consigne 28, il s'ensuit qu'une diminution du couple de freinage électrique sur l'une des roues 2a à 2d pour cause de blocage n'engendre pas, pour autant qu'une réserve de couple de freinage électrique soit prévue, une diminution du couple de freinage électrique total. Cette dernière constatation constitue un avantage intéressant de l'alimentation en parallèle des moteurs 4a à 4d.

On notera que les moyens de commande 6 sont agencés de telle manière que les moyens d'alimentation électrique 8, commandés au moyen des signaux de commande 37 et 38, engendrent un régime optimal des moteurs 4a à 4d en fonction du signal de consigne 28 et du signal de référence 24. Pour ce faire, les moyens de commande 6 sont agencés pour régler la fréquence et l'amplitude de tension du courant électrique alternatif 10 de manière indépendante.

Lorsqu'une diminution du courant électrique alternatif, produit par le ou les moteur(s) de la ou des roue(s) commençant de bloquer, ne peut plus être compensée par l'augmentation du courant fourni par le ou les autre(s) moteur(s), il intervient nécessairement une diminution du courant électrique alternatif 10. Si le signal de consigne 28 reste identique, les moyens de commande 6 agencés pour asservir la valeur du courant électrique alternatif 10 à la valeur du signal de consigne 28 peuvent réagir soit en augmentant l'amplitude de tension du courant électrique alternatif 10, soit en diminuant la fréquence de ce courant alternatif 10 afin d'augmenter le glissement de chacun des moteurs 4a à 4d. Dans ce dernier cas, en admettant que le signal de référence 24 conserve une valeur constante, la fréquence statorique risque de diminuer fortement en s'éloignant de la fréquence de référence. Si tel est le cas, le régime de freinage s'éloigne d'un régime optimal et l'efficacité du freinage risque de diminuer, ce qui serait néfaste pour le comportement routier du véhicule.

Dans le cas extrême où trois des quatre roues 2a à 2d présentent une mauvaise adhérence et qu'un freinage d'urgence est activé par un conducteur du véhicule 31, il résulte de ce qui vient d'être exposé ci-avant que la fréquence d'alimentation et la fréquence statorique tendraient vers la valeur nulle si les moyens de commande 6 ne sont pas agencés de telle manière que la différence de fréquence entre la fréquence de référence et la fréquence statorique ait une valeur inférieure à une valeur prédéterminée. C'est pourquoi, afin d'empêcher qu'une telle situation se produise, les moyens de commande 6 selon une variante préférée de l'invention sont agencés de manière que la différence entre la fréquence de référence et la fréquence statorique, déterminée par la fréquence du courant électrique alternatif 10, soit inférieure à une valeur prédéterminée. Cette valeur prédéterminée peut être variable en fonction de la valeur du signal de référence 24.

Le système de freinage selon le deuxième mode de réalisation de l'invention est donc particulièrement fiable. Etant donné la rapidité de réaction des moteurs électriques asynchrones en présence d'un commencement de blocage d'une roue pour diminuer le couple de freinage électrique et débloquer cette roue, il est quasiimpossible que les quatre roues 2a à 2d du véhicule 31 soient toutes simultanément en condition de perte d'adhérence. De ce fait, le dispositif de mesure fournissant le signal de référence 24 prévu dans ce deuxième mode de réalisation de l'invention remplit très correctement la fonction qu'il est appelé à jouer dans quasi n'importe quelle situation de roulement.

On notera que les moyens de commande 6 et les moyens d'alimentation électrique 8 peuvent également servir à alimenter les moteurs électriques 4a à 4d dans un mode de propulsion dans lequel ces moteurs 4a à 4d fonctionnent comme moteurs en absorbant un courant électrique alternatif.

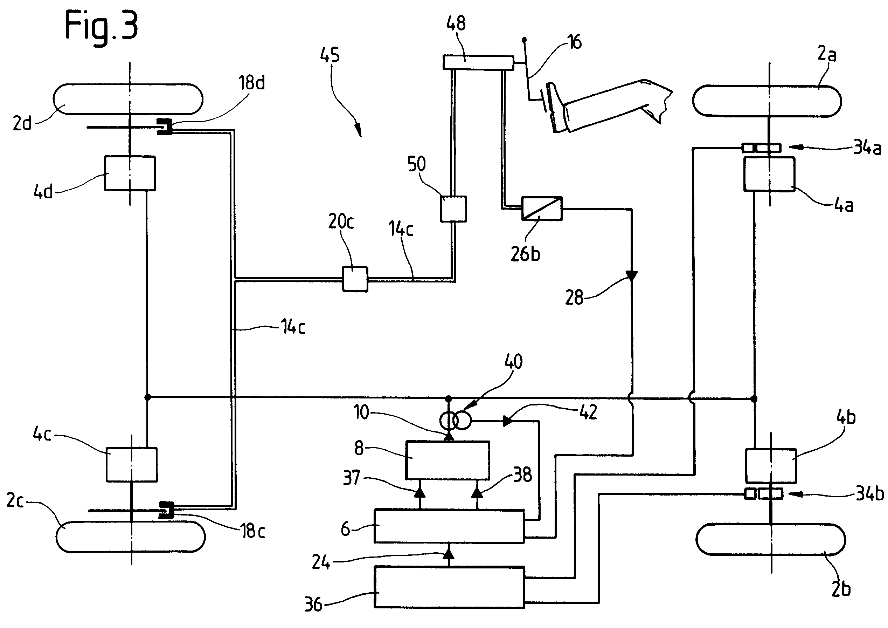

En se référant à la figure 3, on décrira ci-après un troisième mode de réalisation d'un véhicule 45 équipé d'un système de freinage selon l'invention.

Les références déjà décrites dans les deux modes de réalisation précédents ne seront pas commentées ici à nouveau en détail.

Le véhicule 45 selon ce troisième mode de réalisation se distingue essentiellement du deuxième mode de réalisation par le fait que seules les deux roues 2c et 2d situées à l'avant du véhicule sont équipées respectivement d'un frein mécanique 18c et 18d. Ces freins mécaniques 18c et 18d sont actionnés par des moyens actionnables par un conducteur du véhicule 45, lesquels sont reliés aux freins mécaniques 18c et 18d par un circuit hydraulique 14c.

A nouveau, un limiteur de pression 20c est prévu dans le circuit hydraulique 14c. Dans ce troisième mode de réalisation, l'unité de consigne 26b est formée par un capteur de pression servant à mesurer la pression hydraulique régnant dans le cylindre 48 du circuit hydraulique 14c. Le capteur de pression 26b fournit un signal de consigne 28 dont la valeur correspond à la pression hydraulique régnant dans le cylindre 48, cette pression correspondant à la pression exercée par le conducteur du véhicule 45 sur la pédale de frein 16.

Afin de maintenir le couple de freinage mécanique sensiblement nul dans une première plage de valeurs de la pression exercée par le conducteur du véhicule 45 lors d'un freinage, il est prévu dans le circuit hydraulique 14c une soupape de décharge 50. Cette soupape de décharge 50 réduit la pression dans la partie du circuit hydraulique 14c située du côté des freins mécaniques 18c et 18d relativement à cette soupape de décharge 50. De ce fait, il est possible d'utiliser dans une première plage de valeurs de la pression exercée par le conducteur du véhicule 45 seulement le freinage électrique. Pour ce faire, les moyens de commande 6 sont agencés de telle manière que les moteurs électriques 4a à 4d atteignent sensiblement un couple de freinage électrique maximal pour une valeur maximale de la première plage de valeurs de pression susmentionnée.

Dans une seconde plage de valeurs de pression supérieures aux valeurs de pression de la première plage, le freinage électrique est secondé par le freinage mécanique.

On notera qu'il est possible de prévoir des moteurs électriques asynchrones 4c et 4d plus puissants à l'avant du véhicule que les moteurs électriques asynchrones 4a et 4b situés à l'arrière de ce véhicule 45.

Les moyens servant à mesurer la fréquence de rotation d'une roue correspondant à la vitesse du véhicule ou la fréquence rotorique correspondante sont formés dans ce troisième mode de réalisation par une électronique de mesure 36 similaire à celle décrite dans le deuxième mode de réalisation. Cependant, cette électronique de mesure 36 est reliée, contrairement au deuxième mode de réalisation, à seulement deux capteurs de fréquence de rotation 34a et 34b associés respectivement aux deux roues 2a et 2b situés à l'arrière du véhicule.

Ce troisième mode de réalisation de l'invention présente l'avantage d'éviter tout risque de blocage d'une des deux roues 2a et 2b situées à l'arrière du véhicule 45 étant donné que seul un freinage électrique au moyen de moteurs électriques asynchrones 4a et 4b est exercé sur ces deux roues 2a et 2b. De ce fait, il est judicieux de placer les capteurs de fréquence de rotation 34a et 34b respectivement sur les deux roues 2a et 2b. Il résulte de ce qui vient d'être mentionné que le signal de référence 24 fourni aux moyens de commande est fiable et remplit sa fonction dans toutes les situations de roulement.

Afin de rendre le signal de référence 24 encore plus fiable, il est toutefois prévu dans une variante de ce troisième mode de réalisation de placer deux autres capteurs de fréquence de rotation respectivement sur les deux roues avant 2c et 2d de manière similaire au deuxième mode de réalisation décrit ci-avant.

Dans une autre variante de ce troisième mode de réalisation, les moteurs électriques asynchrones 4c et 4d situés à l'avant du véhicule sont alimentés et commandés indépendamment des moteurs électriques asynchrones 4a et 4b situés à l'arrière du véhicule. De ce fait, il est possible d'engendrer dans les moteurs 4c et 4d situés à l'avant du véhicule un régime de fonctionnement différent de celui des moteurs 4a et 4b situés à l'arrière de ce véhicule.

Dans cette dernière variante du troisième mode de réalisation, il est par exemple possible d'agencer des moyens de commande de telle manière que les moteurs 4a et 4b situés à l'arrière du véhicule soient activés, lors d'un freinage, dans un mode de propulsion lorsque survient un blocage des roues avant 2c et 2d dû au freinage mécanique exercé sur ces dernières. De ce fait, il est possible d'obtenir un système de freinage totalement antibloquant, avec un dispositif de freinage mécanique sur les roues avant 2c et 2d capable d'exercer un couple de freinage mécanique supérieur au couple électrique maximal pouvant être fourni par les deux moteurs 4c et 4d situés à l'avant du véhicule, pour autant que le couple mécanique de freinage maximal n'excède pas le couple maximal total pouvant être exercé par les quatre moteurs 4a à 4d.

Finalement, on notera que l'ensemble formé par les quatre moteurs électriques asynchrones 4a à 4d, les moyens de commande 6, les moyens d'alimentation 8 et l'électronique de mesure 36 reliée aux capteurs de fréquence de rotation 34a et 34d est également utilisable pour la traction du véhicule 45. Cette dernière remarque s'applique également aux deux premiers modes de réalisation décrits ci-avant.

## Revendications

1. Véhicule (1; 31; 45) comprenant :
- une roue (2c, 2d);
- un moteur électrique (4c, 4d) comportant un stator et un rotor couplé magnétiquement audit stator et solidaire en rotation de ladite roue;
- des moyens de commande (6) agencés pour faire fonctionner ledit moteur électrique dans un mode de freinage en réponse à un signal de consigne (28);
- un dispositif de freinage mécanique (18c, 18d, 14; 14a; 14c) associé à ladite roue de manière qu'il est susceptible d'exercer un couple de freinage mécanique sur cette roue; et
- des moyens de freinage (16, 22; 26a; 26b) actionnables par un conducteur dudit véhicule, ces moyens de freinage fournissant, lorsqu'ils sont actionnés par ledit conducteur, ledit signal de consigne auxdits moyens de commande pour déterminer la valeur dudit couple de freinage mécanique, lesdits moyens de freinage étant actionnables entre deux positions extrêmes définissant une course de freinage qui comprend une première partie suivie d'une deuxième partie;
ledit véhicule étant caractérisé en ce que ledit moteur électrique (4c) est du type asynchrone, ledit stator comprenant un bobinage statorique agencé de manière à produire un champ magnétique tournant à une fréquence statorique déterminée par lesdits moyens de commande, ledit rotor tournant à une fréquence rotorique en réponse audit champ magnétique tournant, en ce que le véhicule comprend également des moyens d'alimentation électrique (8) agencés de manière que ledit moteur électrique peut fonctionner dans ledit mode de freinage comme générateur ou comme moteur, et des moyens de mesure (36, 34a, 34b, 34c, 34d) pour produire un signal de référence (24) correspondant à une fréquence de référence sensiblement proportionnelle à la vitesse dudit véhicule, et en ce que, lorsque ledit véhicule a une vitesse comprise dans une plage de valeurs donnée et que lesdits moyens de freinage sont actionnés à l'intérieur de la deuxième partie de ladite course de freinage, ledit dispositif de freinage mécanique est activé et ledit moteur électrique fonctionne simultanément dans ledit mode de freinage, lesdits moyens de commande (6) répondant audit signal de référence (24) pour déterminer ladite fréquence statorique de manière que cette fréquence statorique est supérieure à zéro et inférieure à ladite fréquence de référence, de sorte que si le dispositif de freinage mécanique tend à bloquer ladite roue, ledit moteur électrique passe automatiquement à un mode de fonctionnement moteur s'opposant au couple de freinage mécanique sur ladite roue.

2. Véhicule (1; 31; 45) selon la revendication 1, caractérisé en ce que lesdits moyens de freinage (16, 22; 26a; 26b) comprennent une unité de consigne (26; 26a; 26b) qui fournit ledit signal de consigne (28) auxdits moyens de commande (6).

3. Véhicule (1; 31; 45) selon la revendication 1 ou 2, caractérisé en ce que ledit dispositif de freinage mécanique comprend un circuit hydraulique (14; 14a; 14c) et un frein mécanique servant à exercer ledit couple de freinage mécanique, ce dernier variant en fonction d'une pression de freinage appliquée par ledit circuit hydraulique sur ledit frein mécanique et déterminée par la position d'une pédale de frein (16) appartenant auxdits moyens actionnables par un conducteur dudit véhicule, et en ce qu'un limiteur de pression (20; 20a; 20c) est prévu dans ledit circuit hydraulique de manière à limiter ledit couple de freinage mécanique pour que ce dernier reste inférieur ou égal à un couple maximal pouvant être fourni par ledit moteur électrique (4c, 4d).

4. Véhicule (45) selon les revendications 2 et 3, caractérisé en ce que ladite unité de consigne est formée par un capteur de pression (26b) permettant de mesurer la pression exercée par ledit conducteur sur ladite pédale de frein (16), ce capteur de pression fournissant ledit signal de consigne (28) dont la valeur est fonction de ladite pression exercée par ledit conducteur.

5. Véhicule (45) selon la revendication 4, caractérisé en ce qu'il est prévu dans ledit circuit hydraulique (14c) une soupape de décharge (50) servant à maintenir ledit couple de freinage mécanique sensiblement à zéro dans une première plage de valeurs de pression de ladite pression exercée par ledit conducteur, lesdits moyens de commande (6) étant agencés de manière que ledit moteur électrique (4c, 4d) atteigne sensiblement un couple de freinage électrique maximal pour une valeur maximale de ladite première plage.

6. Véhicule (31) selon les revendications 2 et 3, caractérisé en ce que ladite unité de consigne est formée par un capteur de position (26a) de ladite pédale de frein (16), ce capteur de position fournissant ledit signal de consigne (28) dont la valeur correspond à ladite position de ladite pédale de frein (16).

7. Véhicule (31) selon la revendication 6, caractérisé en ce que ladite pédale de frein (16) présente ladite course de freinage, dont ladite première partie n'engendre aucune augmentation de pression dans ledit circuit hydraulique (14a), lesdits moyens de commande (6) étant agencés de manière que ledit moteur électrique (4c, 4d) atteigne sensiblement un couple de freinage électrique maximal pour une position de ladite pédale de frein sensiblement en bout de ladite première partie.

8. Véhicule (1; 31; 45) selon la revendication 1, caractérisé en ce que, lorsque ledit véhicule a une vitesse comprise dans ladite plage de valeurs donnée et que lesdits moyens de freinage sont actionnés à l'intérieur de ladite deuxième partie de ladite course de freinage, la différence entre ladite fréquence de référence et ladite fréquence statorique est inférieure à une valeur maximale prédéterminée, cette valeur maximale pouvant être variable en fonction de ladite fréquence de référence.

9. Véhicule (1; 31; 45) selon l'une quelconque des revendications précédentes comportant :
- au moins une première roue (2c) et une deuxième roue (2d);
- un premier moteur électrique asynchrone (4c) et un deuxième moteur électrique asynchrone (4d) associés respectivement auxdites première et deuxième roues;
ce véhicule étant caractérisé en ce que lesdits premier et deuxième moteurs électriques asynchrones comprennent chacun un bobinage statorique présentant un nombre identique de pôles, ces premier et deuxième moteurs électriques asynchrones étant reliés en parallèle auxdits moyens d'alimentation électrique (8).

10. Véhicule (1; 31; 45) selon la revendication 9 comprenant deux roues avant (2c, 2d) et deux roues arrière (2a, 2b), caractérisé en ce qu'il comprend en outre :
- deux freins mécaniques (18c, 18d) associés respectivement aux deux roues avant et appartenant audit dispositif de freinage mécanique;
- quatre moteurs électriques asynchrones (4a, 4b, 4c, 4d) associés respectivement aux deux roues avant et deux roues arrière, ces quatre moteurs électriques asynchrones étant reliés en parallèle auxdits moyens d'alimentation électrique (8), ces derniers absorbant un courant électrique alternatif total (10) dont la valeur est asservie à la valeur dudit signal de consigne (28).

11. Véhicule (45) selon la revendication 10, caractérisé en ce qu'il comprend seulement deux freins mécaniques (18c, 18d).

12. Véhicule (1; 31) selon la revendication 10, caractérisé en ce que ledit dispositif de freinage mécanique comprend également deux freins mécaniques (18a, 18b) associés respectivement aux deux roues arrières (2a, 2b) et en ce que ce dispositif de freinage mécanique est agencé de manière que chacun des freins mécaniques (18a à 18d) associés respectivement aux deux roues avant (2c, 2d) et deux roues arrière (2a, 2b) a un couple de freinage maximal inférieur ou égal à un couple maximal pouvant être fourni par ledit moteur électrique asynchrone associé à la roue avant ou arrière respective.

13. Véhicule (45) selon l'une des revendications 10 à 12, caractérisé en ce que lesdits moyens de mesure sont formés par deux capteurs de fréquence de rotation (34a, 34b) associés aux deux roues arrière (2a, 2b) et par une électronique de mesure (36) reliée électriquement à ces deux capteurs de fréquence de rotation, cette électronique de mesure fournissant ledit signal de référence (24) et étant agencée de manière que la valeur de ce signal de référence correspond à la fréquence rotorique maximale des moteurs électriques asynchrones (4a, 4b) associés respectivement aux deux roues arrière (2a, 2b).

14. Véhicule (45) selon la revendication 13, caractérisé en ce que lesdits moyens de mesure comprennent seulement deux capteurs de fréquence de rotation (34a, 34b).

15. Véhicule (31) selon l'une des revendications 10 à 12, caractérisé en ce que lesdits moyens de mesure comprennent quatre capteurs de fréquence de rotation (34a, 34b, 34c, 34d) associés respectivement aux deux roues avant (2c, 2d) et deux roues arrière (2a, 2b) par une électronique de mesure (36) reliée électriquement à ces quatre capteurs de fréquence de rotation, cette électronique de mesure fournissant ledit signal de référence (24) et étant agencée de manière que la valeur de ce signal de référence correspond à la fréquence rotorique maximale des moteurs électriques asynchrones (4a à 4d) associés respectivement à ces deux roues avant et deux roues arrière.

## Claims

1. Vehicle (1; 31; 45) having :
- a wheel (2c, 2d);
- an electric motor (4c, 4d) having a stator and a rotor magnetically coupled to said stator and rotationaly fixed to said wheel;
- control means (6) arranged to cause said electric motor to operate in an electric braking mode in response to an set point signal (28);
- a mechanical braking device (18c, 18d, 14; 14a; 14c) associated with said wheel so that it is capable of exerting a mechanical braking torque on this wheel; and
- braking means (16, 22; 26a; 26b) operable by a driver of said vehicle , these braking means providing, when they are actuated by said driver, said set point signal to said control means to determine the value of said mechanical braking torque, said braking means being operable between two extreme positions defining a braking travel which comprises a first part followed by a second part;
said vehicle being characterised in that said electric motor (4c) is of the asynchronous type, said stator having a stator winding arranged so as to produce a magnetic field rotating at a stator frequency determined by said control means, said rotor rotating at a rotor frequency in response to said rotating magnetic field, in that the vehicle also has electric supply means (8), arranged so that said electric motor can function as a generator or as a motor in said braking mode, and measuring means (36, 34a, 34b, 34c, 34d) to produce a reference signal (24) corresponding to a reference frequency substantially proportional to the speed of said vehicle, and in that, when the speed of said vehicle lies within a range of given values and said braking means are actuated within the second part of said braking travel, said mechanical braking device is activated and said electric motor simultaneously functions in said electric braking mode, said control means (6) responding to said reference signal (24) to determine said stator frequency so that this stator frequency is greater than zero and less than said reference frequency, so that if the mechanical braking device is tending to lock said wheel, said electric motor passes automatically into a motor function mode opposing the mechanical braking torque on said wheel.

2. Vehicle (1; 31; 45) according to claim 1, characterised in that said braking means (16, 22; 26a; 26b) comprise an set point unit (22; 26a; 26b) which supplies said set point signal (28) to said control means (6).

3. Vehicle (1; 31; 45) according to claim 1 or 2, characterised in that said mechanical braking device has a hydraulic circuit (14; 14a; 14c) and a mechanical brake serving to exert said mechanical braking torque, this latter varying as a function of a braking pressure applied by said hydraulic circuit to said mechanical brake and determined by the position of a brake pedal (16) pertaining to said means actuatable by a driver of said vehicle, and in that a pressure limiter (20; 20a; 20c) is provided in said hydraulic circuit so as to limit said mechanical braking torque so that this latter remains less than or equal to a maximum couple capable of being supplied by said electric motor (4c, 4d).

4. Vehicle (45) according to claims 2 and 3, characterised in that said set point unit is composed by a pressure sensor (26b) making it possible to measure the pressure exerted by said driver on said brake pedal (16), this pressure sensor supplying said set point signal (28) the value of which is a function of said pressure exerted by said driver.

5. Vehicle (45) according to claim 4, characterised in that said hydraulic circuit (14c) includes a discharge valve (50) serving to maintain said mechanical braking torque substantially at zero in a first range of pressure values of said pressure exerted by said driver, said control means (6) being arranged so that said electric motor (4c, 4d) substantially attains a maximum electric braking torque for a maximum value of said first range.

6. Vehicle (31) according to claims 2 and 3, characterised in that said set point unit is composed of a position sensor (26a) of said brake pedal (16), this position sensor supplying said set point signal (28) the value of which corresponds to said position of said brake pedal (16).

7. Vehicle (31) according to claim 6, characterised in that said brake pedal (16) has a certain travel, a first part of which does not cause any increase in pressure in said hydraulic circuit (14a), said control means (6) being arranged so that said electric motor (4c, 4d) reaches substantially a maximum electric braking torque for a position of said brake pedal substantially at the end of said first part.

8. Vehicle (1; 31; 45) according to claim 1, characterised in that, when said vehicle has a speed comprised in said given range of values and said braking means are actuated within said predetermined range of said braking travel, the difference between said reference frequency and said stator frequency is less than a predetermined maximum value, it being possible for this maximum value to vary as a function of said reference frequency.

9. Vehicle (1; 31; 45) according to any one of the preceding claims, having :
- at least one first wheel (2c) and a second wheel (2d);
- a first asynchronous electric motor (4c) and a second asynchronous electric motor (4d) associated respectively with said first and second wheels;
this vehicle being characterised in that said first and second asynchronous electric motors each comprise a stator winding having an identical number of poles, these first and second asynchronous electric motors being connected in parallel to said electric supply means (8).

10. Vehicle (1; 31; 45) according to claim 9 having two front wheels (2c, 2d) and two rear wheels (2a, 2b), characterised that it also has :
- two mechanical brakes (18c, 18d) associated respectively with the two front wheels and belonging to said mechanical braking device;
- four asynchronous electric motors (4a, 4b, 4c, 4d) associated respectively with the two front wheels and the two rear wheels, these four asynchronous electric motors being connected in parallel to said electric supply means (8), these latter absorbing a total alternating electric current (10) the value of which is slaved to the value of said set point signal (28).

11. Vehicle (45) according to claim 10, characterised in that it only has two mechanical brakes (18c, 18d).

12. Vehicle (1; 31) according to claim 10, characterised in that said mechanical braking device also has two mechanical brakes (18a, 18b) associated respectively with the two rear wheels (2a, 2b) and in that this mechanical braking device is so arranged that each of the mechanical brakes (18a to 18d) associated respectively with the two front wheels (2c, 2d) and the two rear wheels (2a, 2b) has a maximum braking torque less than or equal to a maximum torque capable of being supplied by said asynchronous electric motors associated with the front or rear wheel respectively.

13. Vehicle (45) according to one of claims 10 to 12, characterised in that said measuring means are composed of two rotation frequency sensors (34a, 34b) associated with the two rear wheels (2a, 2b) and by an electronic measuring device (36) electrically connected to these two rotation frequency sensors, this electronic measuring device supplying said reference signal (24) and being arranged so that the value of this reference signal corresponds to the maximum rotor frequency of the asynchronous electric motors (4a, 4b) associated respectively with the two rear wheels (2a, 2b).

14. Vehicle (45) according to claim 13, characterised in that said measuring means only comprise two rotation frequency sensors (34a, 34b).

15. Vehicle (31) according to one of claims 10 to 12, characterised in that said measuring means comprise four rotation frequency sensors (34a, 34b, 34c, 34d) associated respectively with the two front wheels (2c, 2d) and the two rear wheels (2a, 2b) by an electronic measuring device (36) electrically connected to these four rotation frequency sensors, this electronic measuring device supplying said reference signal (24) and being arranged so that the value of this reference signal corresponds to the maximum rotor frequency of the asynchronous electric motors (4a to 4d) associated respectively with these two front wheels and two rear wheels.

## Patentansprüche

1. Fahrzeug (1; 31; 45), mit:
- einem Rad (2c, 2d);
- einem Elektromotor (4c, 4d), der einen Stator sowie einen Rotor enthält, der mit dem Stator magnetisch gekoppelt und mit dem Rad drehfest verbunden ist;
- Steuermitteln (6), die so beschaffen sind, daß sie den Elektromotor als Antwort auf ein Stellsignal (28) in einer Bremsbetriebsart betreiben;
- einer mechanischen Bremsvorrichtung (18c, 18d, 14; 14a; 14c), die dem Rad in der Weise zugeordnet ist, daß sie auf dieses Rad ein mechanisches Bremsmoment ausüben kann; und
- Bremsmitteln (16, 22; 26a; 26b), die von einem Fahrer des Fahrzeugs betätigbar sind, wobei diese Bremsmittel dann, wenn sie vom Fahrer betätigt werden, das Stellsignal an die Steuermittel liefern, um den Wert des mechanischen Bremsmoments zu bestimmen, wobei die Bremsmittel zwischen zwei Extrempositionen betätigbar sind, die einen Bremshub definieren, der einen ersten Teil, dem ein zweiter Teil folgt, umfaßt;
wobei das Fahrzeug dadurch gekennzeichnet ist, daß der Elektromotor (4c) vom asynchronen Typ ist, wobei der Stator eine Statorwicklung enthält, die so beschaffen ist, daß sie ein Magnetfeld erzeugt, das mit einer durch die Steuermittel bestimmten Statorfrequenz rotiert, wobei der Rotor als Antwort auf das rotierende Magnetfeld mit einer Rotorfrequenz rotiert, daß das Fahrzeug außerdem Stromversorgungsmittel (8), die so beschaffen sind, daß der Elektromotor in der Bremsbetriebsart als Generator oder als Motor arbeiten kann, sowie Meßmittel (36, 34a, 34b, 34c, 34d) enthält, um ein Referenzsignal (24) zu erzeugen, das einer zur Geschwindigkeit des Fahrzeugs im wesentlichen proportionalen Referenzfrequenz entspricht, und daß dann, wenn das Fahrzeug eine Geschwindigkeit innerhalb eines gegebenen Wertebereichs besitzt und die Bremsmittel innerhalb des zweiten Teils des Bremshubs betätigt werden, die mechanische Bremsvorrichtung aktiviert wird und der Elektromotor gleichzeitig in der Bremsbetriebsart arbeitet, wobei die Steuermittel (8) auf das Referenzsignal (24) antworten, um die Statorfrequenz in der Weise zu bestimmen, daß diese Statorfrequenz größer als Null und kleiner als die Referenzfrequenz ist, so daß der Elektromotor dann, wenn die mechanische Bremsvorrichtung dazu neigt, das Rad zu blockieren, automatisch in eine Motorbetriebsart übergeht, die dem mechanischen Bremsmoment auf das Rad entgegenwirkt.

2. Fahrzeug (1; 31; 45) nach Anspruch 1, dadurch gekennzeichnet, daß die Bremsmittel (16, 22; 26a; 26b) eine Stelleinheit (26; 26a; 26b) enthalten, die das Stellsignal (28) an die Steuermittel (6) liefert.

3. Fahrzeug (1; 31; 45) nach Anspruch 1 oder 2, dadurch gekennzeichnet, daß die mechanische Bremsvorrichtung einen Hydraulikkreis (14; 14a; 14c) und eine mechanische Bremse enthält, die dazu dienen, das mechanische Bremsmoment auszuüben, wobei sich dieses letztere in Abhängigkeit von einem Bremsdruck ändert, der vom Hydraulikkreis auf die mechanische Bremse ausgeübt wird und durch die Stellung eines Bremspedals (16) bestimmt ist, das den von einem Fahrer des Fahrzeugs betätigbaren Mitteln zugehört, und daß ein Druckbegrenzer (20; 20a; 20c) in dem Hydraulikkreis so vorgesehen ist, daß das mechanische Bremsmoment begrenzt wird, damit dieses letztere kleiner oder gleich einem maximalen Moment bleibt, das vom Elektromotor (4c, 4d) geliefert werden kann.

4. Fahrzeug (45) nach den Ansprüchen 2 und 3, dadurch gekennzeichnet, daß die Stelleinheit durch einen Drucksensor (26b) gebildet ist, der ermöglicht, den vom Fahrer auf das Bremspedal (16) ausgeübten Druck zu messen, wobei dieser Drucksensor das Stellsignal (28) liefert, dessen Wert von dem durch den Fahrer ausgeübten Druck abhängt.

5. Fahrzeug (45) nach Anspruch 4, dadurch gekennzeichnet, daß in dem Hydraulikkreis (14c) ein Entlastungsventil (50) vorgesehen ist, das dazu dient, das mechanische Bremsmoment in einem ersten Druckwertebereich des vom Fahrer ausgeübten Drucks im wesentlichen auf null zu halten, wobei die Steuermittel (6) so beschaffen sind, daß der Elektromotor (4c, 4d) für einen Maximalwert des ersten Bereichs im wesentlichen ein maximales elektrisches Bremsmoment erreicht.

6. Fahrzeug (31) nach den Ansprüchen 2 und 3, dadurch gekennzeichnet, daß die Stelleinheit durch einen Stellungssensor (26a) für das Bremspedal (16) gebildet ist, wobei dieser Stellungssensor das Stellsignal (28) liefert, dessen Wert der Stellung des Bremspedals (16) entspricht.

7. Fahrzeug (31) nach Anspruch 6, dadurch gekennzeichnet, daß das Bremspedal (16) den Bremshub darstellt, wovon der erste Teil im Hydraulikkreis (14a) keine Druckerhöhung erzeugt, wobei die Steuermittel (6) so beschaffen sind, daß der Elektromotor (4c, 4d) für eine Stellung des Bremspedals, die im wesentlichen dem Ende des ersten Teils entspricht, im wesentlichen ein maximales elektrisches Bremsmoment erreicht.

8. Fahrzeug (1; 31; 45) nach Anspruch 1, dadurch gekennzeichnet, daß die Differenz zwischen der Referenzfrequenz und der Statorfrequenz dann, wenn das Fahrzeug eine Geschwindigkeit besitzt, die in einem gegebenen Wertebereich liegt, und die Bremsmittel innerhalb des zweiten Teils des Bremshubes betätigt werden, kleiner als ein vorgegebener Maximalwert ist, wobei dieser Maximalwert in Abhängigkeit von der Referenzfrequenz veränderlich ist.

9. Fahrzeug (1; 31; 45) nach irgendeinem der vorangehenden Ansprüche, mit:
- wenigstens einem ersten Rad (2c) und einem zweiten Rad (2d);
- einem ersten asynchronen Elektromotor (4c) und einem zweiten asynchronen Elektromotor (4d), die dem ersten bzw. dem zweiten Rad zugeordnet sind;
wobei dieses Fahrzeug dadurch gekennzeichnet ist, daß der erste und der zweite asynchrone Elektromotor jeweils eine Statorspule enthält, die die gleiche Anzahl von Polen aufweisen, wobei diese ersten und zweiten asynchronen Elektromotoren zu den Stromversorgungsmitteln (8) parallelgeschaltet sind.

10. Fahrzeug (1; 31; 45) nach Anspruch 9, das zwei Vorderräder (2c, 2d) und zwei Hinterräder (2a, 2b) enthält, dadurch gekennzeichnet, daß es außerdem enthält:
- zwei mechanische Bremsen (18c, 18d), die jeweils einem der zwei Vorderräder zugeordnet sind und der mechanischen Bremsvorrichtung zugehören;
- vier asynchrone Elektromotoren (4a, 4b, 4c, 4d), die jedem der beiden Vorderräder und jedem der beiden Hinterräder zugeordnet sind, wobei diese vier asynchronen Elektromotoren zu den Stromversorgungsmitteln (8) parallelgeschaltet sind, wobei diese letzteren einen elektrischen Gesamtwechselstrom (10) absorbieren, dessen Wert auf den Wert des Stellsignals (28) geregelt wird.

11. Fahrzeug (45) nach Anspruch 10, dadurch gekennzeichnet, daß es nur zwei mechanische Bremsen (18c, 18d) enthält.

12. Fahrzeug (1; 31) nach Anspruch 10, dadurch gekennzeichnet, daß die mechanische Bremsvorrichtung außerdem zwei mechanische Bremsen (18a, 18b) enthält, die jeweils einem der beiden Hinterräder (2a, 2b) zugeordnet sind, und daß diese mechanische Bremsvorrichtung so beschaffen ist, daß jede der mechanischen Bremsen (18a bis 18d), die jeweils einem der beiden Vorderräder (2c, 2d) und einem der beiden Hinterräder (2a, 2b) zugeordnet sind, ein maximales Bremsmoment besitzt, das kleiner oder gleich einem maximalen Moment ist, das vom asynchronen Elektromotor, der dem jeweiligen Vorderrad oder Hinterrad zugeordnet ist, geliefert wird.

13. Fahrzeug (45) nach einem der Ansprüche 10 bis 12, dadurch gekennzeichnet, daß die Meßmittel durch zwei Rotationsfrequenzsensoren (34a, 34b), die den zwei Hinterrädern (2a, 2b) zugeordnet sind, und durch eine Meßelektronik (36), die mit diesen zwei Rotationsfrequenzsensoren elektrisch verbunden ist, gebildet sind, wobei diese Meßelektronik das Referenzsignal (24) liefert und so beschaffen ist, daß der Wert dieses Referenzsignals der maximalen Rotorfrequenz der asynchronen elektrischen Motoren (4a, 4b), die jeweils einem der zwei Hinterräder (2a, 2b) zugeordnet sind, entspricht.

14. Fahrzeug (45) nach Anspruch 13, dadurch gekennzeichnet, daß die Meßmittel nur zwei Rotationsfrequenzsensoren (34a, 34b) enthalten.

15. Fahrzeug (31) nach einem der Ansprüche 10 bis 12, dadurch gekennzeichnet, daß die Meßmittel vier Rotationsfrequenzsensoren (34a, 34b, 34c, 34d) enthalten, die jeweils einem der zwei Vorderräder (2c, 2d) und einem der zwei Hinterräder (2a, 2b) über eine Meßelektronik (36) zugeordnet sind, die mit diesen vier Rotationsfrequenzsensoren elektrisch verbunden ist, wobei diese Meßelektronik das Referenzsignal (24) liefert und so beschaffen ist, daß der Wert dieses Referenzsignals der maximalen Rotorfrequenz der asynchronen Elektromotoren (4a bis 4d), die jeweils einem dieser zwei Vorderräder und dieser zwei Hinterräder zugeordnet sind, entspricht.
